# EUROPÄISCHE PATENTSCHRIFT

(11) **EP 3 795 936 B1**
(45) Veröffentlichungstag und Bekanntmachung des Hinweises auf die Patenterteilung: **26.07.2023**
(21) Anmeldenummer: 20195858.4
(22) Anmeldetag: 11.09.2020
(51) Int. Cl.: F28D 20/00

(54) **SPEICHERANLAGE ZUR THERMOCHEMISCHEN SPEICHERUNG VON ENERGIE UND VERFAHREN ZUM BETREIBEN EINER SPEICHERANLAGE**
STORAGE SYSTEM FOR THE THERMOCHEMICAL STORAGE OF ENERGY AND METHOD FOR OPERATING A STORAGE SYSTEM
SYSTÈME D'ACCUMULATION DESTINÉ À L'ACCUMULATION THERMOCHIMIQUE DE L'ÉNERGIE ET PROCÉDÉ DE FONCTIONNEMENT D'UN SYSTÈME D'ACCUMULATION

(30) Priorität: 23.09.2019 DE 102019125540
(43) Veröffentlichungstag der Anmeldung: 24.03.2021
(73) Patentinhaber: Deutsches Zentrum für Luft- und Raumfahrt e.V., 51147 Köln (DE)
(72) Erfinder: SCHMIDT, Matthias, 50825 Köln (DE); LINDER, Marc Philipp, 70199 Stuttgart (DE); RISTHAUS, M. Sc. Kai, 53844 Troisdorf (DE)
(74) Vertreter: Fleck, Julia Maria

(56) Entgegenhaltungen:
- FR-A1- 3 004 245
- KR-B1- 101 783 385
- US-A- 3 955 554

## Beschreibung

Die Erfindung betrifft eine Speicheranlage zur thermochemischen Speicherung von Energie, mit einer Reaktorvorrichtung umfassend einen von einem Innenmantel eingefassten Reaktionsraum, innerhalb dessen ein Feststoff während einer Beladung in einer Hinreaktion unter Zufuhr von Wärmeenergie von einem ersten Zustand unter Abgabe eines Reaktionsfluids in einen zweiten Zustand überführbar ist und während einer Entladung in einer Rückreaktion unter Abgabe von Wärmeenergie von dem zweiten Zustand unter Aufnahme des Reaktionsfluids in den ersten Zustand überführbar ist.

Das Prinzip der thermochemischen Speicherung basiert auf dem Einsatz reversibler Sorptionsprozesse innerhalb eines Gas-Feststoff-Systems, wobei die Speicheranlage mittels elektrischer Energie (elektrisch) beladbar ist. Bei der Beladung wird elektrische Energie zunächst in Wärme umgewandelt. Die Wärmeenergie wird einem, insbesondere als Schüttgut vorliegenden (partikulären) Feststoff zugeführt. In dem ersten, energetisch unbeladenen, Zustand wird der Feststoff beispielsweise von einem Metallhydroxid, z. B. Calciumhydroxid, gebildet. Bei Wärmeenergiezufuhr reagiert das Metallhydroxid in einer Hinreaktion unter Freisetzung eines Reaktionsfluids, beispielsweise Wasser bzw. Wasserdampf, zu einem zweiten (beladenen) Zustand, beispielsweise einem Metalloxid (z. B. Calciumoxid), in welchem der Feststoff ein höheres chemisches Potenzial aufweist:
Das Metalloxid kann als Feststoff gelagert werden.

Eine Speicheranlage zur thermochemischen Speicherung von Energie gemäss dem Oberbegriff des Patentanspruchs 1 und ein Verfahren der eingangs genannten Art sind in der US 3 955 554 A1 angegeben. Bei dieser bekannten Speicheranlage sind in einem Gehäuse mehrere Kammern angeordnet, wobei aus einer Kammer über einen Schneckenförderer chemisches Material, insbesondere Calciumoxid, nach oben und über eine Rutschfläche in eine weitere Kammer gefördert wird, in der sich Wasser befindet. In dem Wasser wird das Calciumoxid in Calciumhydroxid unter Abgabe von Wärme umgewandelt, die über einen Wärmetauscher abgeführt wird. Die schlammige Masse wird aus der weiteren Kammer über einen weiteren Schneckenförderer nach oben in eine Heizkammer befördert, die mittels einer in diese konzentriert eingeleiteten Solarstrahlung erwärmt wird, um die Feuchtigkeit aus dem Calciumhydroxid auszutreiben und unter Zufuhr von Wärmeenergie in Calciumoxid umzuwandeln. Dieses wird von der Heizkammer 17 über einen noch weiteren Schneckenförderer wieder in die erste Kammer transportiert.

Weitere Speicheranlagen zur thermochemischen Speicherung von Energie und betreffende Verfahren sind in der KR 101 783 385 B1 und der FR 3 004 245 A1 gezeigt.

Eine weitere Speicheranlage ist in der DE 10 2009 052 304 A1 angegeben. Der dabei verwendete Reaktionsraum ist als Durchflussreaktor ausgestaltet. Es hat sich jedoch gezeigt, dass aufgrund ungünstiger thermophysikalischer Eigenschaften das Feststoff-Material ein ungünstiges Fließverhalten innerhalb des Reaktionsraums aufweist, welches nur mittels aufwendiger Materialmodifikation verbessert werden kann. Darunter leiden insbesondere der Wärmeübergang und damit die Leistungsdichte der Reaktorvorrichtung.

Verfahren und Vorrichtungen zur Speicherung von Wärme sind auch aus der DE 10 2014 101 987 A1 und der DE 10 2015 101 214 A1 bekannt.

Die DE 10 2015 217 683 A1 zeigt ein Verfahren mit Übertragung von einem festen, teilchenförmigen Wärmeträger auf einen festen Reaktionspartner, wobei es sich um ein Verfahren zur Spaltung von Wasser in Wasserstoff und Sauerstoff handelt, jedoch nicht um eine Speicheranlage zur thermochemischen Speicherung von Energie. Es wird ein kontinuierlicher Betrieb, d. h. gerade keine Speicherung, angestrebt, wobei eine aus wenigstens zwei sequenziellen reversiblen Schritten bestehende chemische Reaktion abläuft. Innerhalb eines parallelen ersten Kreislaufs zur Kreisführung und Speicherung eines festen Wärmeträgers findet eine sensible Erwärmung des inerten Wärmeträgers statt, ohne Ablauf einer chemischen Reaktion.

In der DE 10 2007 014 230 B4 ist ein Verfahren zum kontinuierlichen Schmelzen anorganischer Salze sowie eine entsprechende Ofenanlage angegeben; um einen solchen Gegenstand geht es vorliegend nicht.

Der Erfindung liegt die Aufgabe zugrunde, eine Speicheranlage der eingangs genannten Art mit einer hohen Leistungsdichte sowie ein Verfahren zum Betreiben der Speicheranlage bereitzustellen.

Die Aufgabe wird für die Speicheranlage mit den Merkmalen des Anspruchs 1 und für das Verfahren mit den Merkmalen des Anspruchs 14 gelöst.

Bei der Speicheranlage ist erfindungsgemäß vorgesehen, dass der Reaktionsraum eine Mischeinrichtung umfasst, mittels welcher der Feststoff während der Hin- und/oder Rückreaktion umlagerbar, insbesondere (je nach Drehzahl) verwirbelbar, ist oder umgelagert bzw. verwirbelt wird. Die Drehzahl zur Erzeugung einer Wirbelschicht ist abhängig von der Ausbildung der Mischeinrichtung und des Feststoffes und kann z. B. zwischen 30 und 300 Umdrehungen/Minute betragen (für Calciumoxid bzw. Calciumhydroxid beispielsweise 200 Umdrehungen/Minute, bei einem Reaktionsraumvolumen von 20 l und einer Füllmenge an Calciumhydroxid von 9 kg). Durch die Umlagerung bzw. Verwirbelung in Art einer mechanischen Wirbelschicht (Fluidisierung) tritt während der Beladung eine Vielzahl von Feststoff-Partikeln wiederholt mit den wärmeübertragenden Flächen innerhalb des Reaktionsraums in thermischen Kontakt. So erfolgt der Wärmeeintrag in den Feststoff nicht (nur) mittels Wärmeleitung innerhalb der Feststoff-Schüttung, sondern insbesondere (auch) in Analogie zu einer konvektiven Wärmeübertragung mittels der Feststoff-Partikel. Der für den Leistungseintrag in die Feststoff-Schüttung wesentliche Wärmeübergang wird insbesondere von dem Wärmeübergangskoeffizienten zwischen der wärmeübertragenden Fläche und den (einzelnen) Partikeln bestimmt. Wie Untersuchungen der Erfinder gezeigt haben, führt diese Reaktorausbildung bzw. Verfahrensführung im Vergleich zu z. B. Festbettreaktoren zu einer z. B. um den Faktor 100 größeren Leistungsdichte bei vergleichbarer Temperaturdifferenz.

Mit einer hohen Betriebstemperatur von z. B. 600 °C innerhalb der Reaktorvorrichtung ist die Speicheranlage dadurch betreibbar, dass eine Antriebseinrichtung der Mischeinrichtung, insbesondere durch eine entsprechende Anordnung einer Welle, von dem Reaktionsraum thermisch entkoppelt angeordnet ist. Insbesondere kann die thermische Entkopplung so ausgebildet sein, dass die maximale Temperatur in der Antriebsvorrichtung 100 °C oder 80 °C beträgt. Hierzu kann beispielsweise ein Luftspalt (mit z. B. einer Breite von zumindest 100 mm) zwischen der Antriebseinrichtung und der übrigen Reaktorvorrichtung bzw. dem Reaktionsraum vorhanden sein und die Antriebsvorrichtung nur mittels der Welle an die übrige Reaktorvorrichtung gekoppelt sein. Die Welle verläuft durch den Luftspalt z. B. ohne Isolierung. So wird auf einfache Weise eine Luftkühlung der Welle erreicht.

In einer bevorzugten Ausbildungsvariante ist der Reaktionsraum (insbesondere (rota-tions-)symmetrisch, z. B. zylindrisch) um eine Mittellängsachse angeordnet und weist die Mischeinrichtung eine auf der Mittellängsachse verlaufende Welle und eine um die Welle rotierbare Rotationsanordnung mit zumindest einem, für eine verbesserte Mischleistung auch mehrere, beispielsweise drei, sich radial erstreckende/n Arm/e auf. Die Welle ist insbesondere über zumindest eine gasdicht ausgebildete Lagereinrichtung z. B. an einer Stirnseite des Reaktionsraums bzw. der Reaktorvorrichtung gelagert. Eine derartige Ausbildung der Mischeinrichtung hat sich als vorteilhaft herausgestellt, da insbesondere eine Verklumpung bzw. Agglomeration des Schüttguts bzw. des Feststoffes vermieden und/oder ggf. aufgebrochen wird. Zusätze bzw. eine Materialmodifikation zur Erhöhung der Fließfähigkeit sind/ist somit nicht erforderlich. So ist zum einen ein verbesserter Wärmeübergang erreichbar. Zum anderen erleichtert dies den Abtransport des Feststoffes durch eine Förderanordnung, wobei die Rotationsanordnung eine vollständig automatisierte Entleerung unterstützen kann.

Ein Blockieren des Feststoffes bei dessen Austrag, wie es bei anderen Reaktorkonzepten auftreten kann, wird dadurch verhindert.

Eine besonders gute Mischwirkung mit einer effektiven Feststoffbewegung (weitgehend) ohne Agglomeration ergibt sich, wenn der Innenmantel zylindrisch ausgebildet ist und wenn sich das radial nach außen gerichtete Ende des Arms/der Arme bis an die Innenwand des Innenmantels erstreckt, wobei insbesondere an dem Ende des Arms/der Arme eine Schaufelvorrichtung angeordnet bzw. das Ende von der Schaufelvorrichtung gebildet ist (oder dieselbe bildet). "Bis an die Innenwand" bedeutet vorzugsweise berührungsfrei, sodass eine gute Drehbarkeit gewährleistet ist. Für eine gute Materialdurchdringung kann die Schaufelvorrichtung eine in Laufrichtung zulaufende Kante und/oder Spitze aufweisen, z. B. in Art eines Pflugschars.

In einer bevorzugten Weiterbildung weist die Reaktorvorrichtung eine Wärmeeintragungsanordnung auf, wobei zumindest ein Teil des Innenmantels (insbesondere die Zylinderumfangsfläche und/oder zumindest eine der Stirnseiten) und/oder ein Teil der Mischeinrichtung (z. B. die Schaufeln und/oder Arme) elektrisch (mittels Stromwärme) und/oder induktiv beheizbar ist/sind und/oder wobei dem Reaktionsraum zugesetzte Strukturen (beispielsweise Schüttkörper, wie Kugeln) und/oder der Feststoff induktiv und/oder mittels Bestrahlung (insbesondere mittels Infrarot- und/oder Mikrowellenbestrahlung) beheizbar ist/sind. Die Wärmeeintragungsanordnung ist zur Wärmeerzeugung aus elektrischer Energie zur Verwendung bei der Beladung ausgebildet. Eine elektrische Heizeinrichtung zur elektrischen Beheizung des Innenmantels kann beispielsweise auf dessen Außenseite angeordnete Heizelemente aufweisen. Eine derartige Wärmeeintragungsanordnung, ohne Verwendung eines (sensiblen) Wärmeträgerfluids zum Wärmeeintrag in den Feststoff, bietet den Vorteil, dass die elektrische Energie bei der Beladung bei einer konstanten maximalen Temperatur zugeführt werden kann. Ein Temperaturabfall über die zur Verfügung stehende Wärmeübertragungsfläche wird vermieden, was einen vergleichsweise höheren Leistungseintrag in die Feststoff-Schüttung erlaubt.

In einer Weiterbildung der Erfindung weist die Reaktorvorrichtung einen Außenmantel auf, der zumindest einen Teil des Innenmantels unter Bildung eines fluiddurchströmbaren Zwischenraums umgibt. Der Zwischenraum ist vorzugsweise mit zumindest einem, z. B. zwei, Anschlussvorrichtung(en) zur Zu- und/oder Abfuhr eines Fluids versehen. So kann die Fläche des Innenmantels auch bei der thermischen Entladung vorteilhaft zur Wärmeübertragung genutzt werden, wobei der Zwischenraum von einem Wärmeträgerfluid, z. B. Wasser, durchströmt wird. Bei Vorhandensein elektrischer Heizelemente auf der Außenfläche des Innenmantels, d. h. mit Kontakt zu dem Zwischenraum, sind diese zweckmäßigerweise fluiddicht ausgebildet.

Eine zweckmäßige Beschickung des Reaktionsraums mit dem Feststoff wird ermöglicht, wenn die Reaktorvorrichtung eine Eintragvorrichtung zum Eintrag des Feststoffes und eine, insbesondere der Eintragvorrichtung gegenüberliegend angeordnete, Austragvorrichtung aufweist. Vorzugsweise ist die Eintragvorrichtung und/oder die Austragvorrichtung derart angeordnet, dass der Feststoff unter Hilfe der Schwerkrafteinwirkung eingetragen bzw. ausgetragen werden kann. Bei einer (im Wesentlichen) horizontalen Ausrichtung der Mittellängsachse des Reaktionsraums kann die Eintragvorrichtung z. B. symmetrisch bzgl. des Reaktionsraums, insbesondere mittig auf bzw. in dem (Zylinder-)Mantel, angeordnet sein.

Zur Vermeidung von Brückenbildung und Verstopfung beim Feststoffein- und/oder austrag hat es sich als vorteilhaft erwiesen, wenn die Eintragvorrichtung und/oder die Austragvorrichtung zylindrisch ausgebildet ist/sind und einen Mindestdurchmesser von 50 mm, vorzugsweise einen Mindestdurchmesser von 70 mm, insbesondere einen Mindestdurchmesser von 76 mm, aufweisen.

Vorteilhafterweise weist die Reaktorvorrichtung eine Fluideintrageinrichtung mit einem Fluidauslass auf, mittels dessen das, insbesondere für die Rückreaktion benötigte, Reaktionsfluid in den Reaktionsraum einbringbar ist, wobei der Fluidauslass zur Zerstäubung, insbesondere mit einer oder mehreren Zerstäuber- bzw. Nebeldüsen, des Reaktionsfluids, ausgebildet ist. So kann das Reaktionsfluid großflächig auf dem Feststoff verteilt und eine gleichmäßge Einbringung des Reaktionsfluids und Reaktion des Feststoffes mit dem Reaktionsfluid bewirkt werden.

Um ein Verstopfen des Fluidauslasses zu vermeiden, ist es zweckmäßig, wenn der Fluidauslass (z. B. entgegen der Schwerkraftrichtung) außerhalb des Reaktionsraums, insbesondere innerhalb der Eintragvorrichtung (z. B. symmetrisch innerhalb dieser) (oder z. B. in einer anderen, entgegen der Schwerkraft ausgerichteten Ausnehmung des Reaktionsraums), angeordnet ist. Dies ist insbesondere zweckmäßig bei Ausbildung des Fluidauslasses zur Zerstäubung, aber auch bei einer anderen Ausbildung, z. B. in Art eines Brausekopfes. Als geeignet hat sich ein Abstand zu dem Reaktionsraum (d. h. z. B. zu dem Übergang der Eintragvorrichtung zu dem Reaktionsraum) von mindestens 30 mm, vorzugsweise mindestens 50 mm oder 70 mm, z. B. 80 mm herausgestellt.

In einer bevorzugten Ausbildungsvariante weist die Reaktorvorrichtung eine Anschlussvorrichtung mit einem Fluideinlass zur Abführung des Reaktionsfluids aus dem Reaktionsraum auf. Durch den separat zu dem Fluidauslass vorhandenen Fluideinlass können die beiden Komponenten unabhängig voneinander jeweils für ihren Einsatzzweck optimiert ausgelegt werden. Zur Vermeidung von Verstopfung ist es zweckdienlich, wenn der Fluideinlass außerhalb des Reaktionsraums, z. B. innerhalb der Eintragvorrichtung, angeordnet ist. Als geeignet hat sich ein Abstand zu dem Reaktionsraum von mindestens 30 mm, vorzugsweise mindestens 50 mm oder 70 mm, z. B. 80 mm herausgestellt.

In einer zweckmäßigen Weiterbildung umfasst die Reaktorvorrichtung eine pneumatische Schließeinheit mit einer, insbesondere in der Austragvorrichtung angeordneten, Schließeinrichtung und einer Stelleinrichtung, mittels der der Reaktionsraum während der Hin- und/oder Rückreaktion fluiddicht verschließbar ist, wobei die Stelleinrichtung, z. B. mittels einer (z. B. mindestens 15 mm dicken) Keramikscheibe, von dem Reaktionsraum thermisch entkoppelt ist. Die Schließeinrichtung kann z. B. tellerförmig ausgebildet sein und zum Öffnen z. B. in Achsrichtung der Austragvorrichtung (nach unten) verschoben werden. Die thermische Entkopplung ist einer hochtemperaturfesten Ausbildung der Reaktorvorrichtung zuträglich, die z. B. Betriebstemperaturen von bis zu 600 °C oder mehr erlaubt.

Bevorzugt umfasst die Speicheranlage einen Fluidkreislauf mit einer Wärmeübertragungseinrichtung und einer Fördereinrichtung, mittels deren Reaktionsfluid und/oder Wärmeträgerfluid aus der Reaktorvorrichtung, insbesondere aus dem Reaktionsraum und/oder aus dem Zwischenraum, förderbar und unter Wärmeabgabe durch die Wärmeübertragungseinrichtung leitbar ist. Die Wärmeübertragungseinrichtung dient insbesondere zur Wärmeübertragung an eine Wärmesenke (einen Wärmeverbraucher), z. B. eine Wasser-Wärmespeichervorrichtung in Form eines sogenannten Kombispeichers. Der Fluidkreislauf kann zumindest teilweise offen und/oder geschlossen bzw. öffenbar und schließbar ausgebildet sein. Durch diese Ausbildung ist eine Wärmeübertragerfläche zur Wärmeübertragung aus dem Reaktionsraum an die Wärmesenke außerhalb der Reaktorvorrichtung angeordnet und kann entsprechend unabhängig von der Reaktorvorrichtung für die Wärmeübertragung optimiert ausgelegt sein.

Mittels des Fluidkreislaufs kann beispielsweise während der elektrischen Beladung frei werdendes Reaktionsfluid, insbesondere Wasserdampf, aus dem Reaktionsraum abgeführt und vorzugsweise innerhalb der Wärmeübertragungseinrichtung kondensiert werden. Die freiwerdende Kondensationswärme kann innerhalb der Wärmesenke in einer mit Wärme zu versorgenden Einheit, z. B. einem Gebäude, etwa zur Warmwasser-Bereitstellung genutzt werden. Bei der Entladung kann beispielsweise ein Überschuss an Reaktionsfluid, d. h. mehr als für die Rückreaktion notwendig, in den Reaktionsraum zugegeben werden. Durch die Reaktionswärme kann das überschüssige Reaktionsfluid verdampft und in den Fluidkreislauf mittels der Fördereinrichtung abgesaugt werden. Zu diesem Zweck steht vorzugsweise die Anschlussvorrichtung mit dem Fluidkreislauf in Strömungsverbindung. Die (Kondensation-)Wärme des Reaktionsfluids, das hierbei zugleich als Wärmeträgerfluid fungiert, wird mittels der Wärmeübertragungseinrichtung an die Wärmesenke abgegeben. Das abgekühlte Reaktionsfluid bzw. das entstehende Kondensat kann insbesondere mittels der Fluideintrageinrichtung, die mit dem Fluidkreislauf in Strömungsverbindung stehen bzw. gebracht werden kann, wieder dem Reaktionsraum zugeführt werden. Denkbar wäre bei der thermischen Entladung auch, dass zunächst ein Wärmeträgerfluid, das auch als Reaktionsfluid verwendbar ist, beispielsweise Wasser bzw. Wasserdampf, in den Zwischenraum zur Wärmeaufnahme eingebracht wird und diesen durchströmt und anschließend den Fluidkreislauf zur Wärmeabgabe über die Wärmeübertragungseinrichtung an die Wärmesenke durchströmt. Anschließend kann beispielsweise das abgekühlte Wärmeträgerfluid bzw. Reaktionsfluid z. B. mittels der Fluideintrageinrichtung dem Reaktionsraum für die Rückreaktion zugeführt werden.

In einer teileoptimierten Ausbildungsvariante sind die Wärmeübertragungseinrichtung und Fördereinrichtung in einer Förder-/Wärmeübertragungseinheit angeordnet, wobei die Wärmeübertragungseinrichtung zur Wärmeübertragung an ein zweites, insbesondere durchströmendes, Wärmeträgerfluid ausgebildet ist. Vorzugsweise bedient sich die Fördereinrichtung eines Förderprinzips mit Unterdruckerzeugung. Das zweite Wärmeträgerfluid kann dabei vorteilhaft zugleich zur Kühlung der Fördereinrichtung dienen, z. B. um den Unterdruck aufrecht zu erhalten.

Als besonders vorteilhaft hat sich dabei herausgestellt, wenn die Förder-/Wärmeübertragungseinheit als Ringpumpenanordnung ausgebildet ist, wobei im Betrieb das zweite Wärmeträgerfluid durch ein Kühlfluid, insbesondere Kühlwasser, der Ringpumpenanordnung gebildet ist. Vorteilhafterweise ist das Kühlfluid bzw. (zweite) Wärmeträgerfluid aus dem gleichen Fluid gebildet wie das Reaktionsfluid bzw. Wärmeträgerfluid, z. B. aus Wasser. So kann das Reaktionsfluid nach der Kondensation von dem Kühlfluid aufgenommen werden und die beide Fluide brauchen nicht voneinander separiert zu werden.

Eine vorteilhafte optimierte Dimensionierung des Reaktionsraums getrennt von einer Feststoffspeichervorrichtung ist dadurch erreichbar, dass die Speicheranlage zwei getrennte Speicherräume (innerhalb eines Gehäuses mit mechanischer Trennung oder innerhalb getrennter Gehäuse), zur separaten Speicherung des Feststoffes in dem ersten Zustand und in dem zweiten Zustand außerhalb des Reaktionsraums aufweist. Dies ermöglicht eine beliebige Skalierung von Leistung (betreffend den Reaktionsraum) und Kapazität (betreffend die Volumina der Speicherräume). Dieser Vorteil ist insbesondere für eine saisonale Energiespeicherung im (Einzel-) Gebäude relevant, da hier eine vergleichsweise kleine Leistung bei gleichzeitig vergleichsweise großer Speicherkapazität erforderlich ist. Dabei ist vorzugsweise zumindest eine Förderanordnung vorhanden, mittels derer eine zu reagierende Feststoffcharge (entsprechend einer Füllmenge des Reaktionsraums) in den Reaktionsraum eintragbar bzw., nach der Reaktion, austragbar ist. Auf diese Weise kann ein quasi kontinuierlicher Batchbetrieb der Reaktorvorrichtung ablaufen, wobei der Reaktionsraum mit Feststoff (in dem ersten oder dem zweiten Zustand vorliegend) beschickt wird, der energetische Be- oder Entladevorgang abläuft, nach abgelaufener Reaktion der Feststoff in den jeweils anderen Speicherraum gefördert wird und die Reaktorvorrichtung erneut mit Feststoff beladen wird. Denkbar wären auch das Vorhandensein mehrerer Reaktorvorrichtungen bzw. Reaktionsräume, wobei z. B. während des Feststoffeintrags bzw. -austrags die energetische Be- oder Entladung in dem jeweils anderen Reaktionsraum stattfinden könnte.

Vorzugsweise ist die Speicheranlage für eine Langzeitspeicherung zur Wärmeversorgung einer mit Wärme zu versorgenden Einheit dimensioniert, wobei die Beladung während einer Warmperiode, insbesondere einer Sommersaison, und die Entladung während einer Kaltperiode, insbesondere einer Wintersaison, stattfinden kann. Dabei sind insbesondere die Feststoffspeichervorrichtung und/oder die Reaktorvorrichtung unter Berücksichtigung der bereitzustellenden Leistung ausgelegt. Bei der mit Wärme zu versorgenden Einheit kann es sich beispielsweise um ein Ein- oder Mehrfamilienhaus, eine Büroeinheit oder Ähnliches handeln. Vorzugsweise läuft dabei innerhalb der Warmperiode ein (vollständiger) elektrischer Beladezyklus und innerhalb der Kaltperiode ein (vollständiger) thermischer Entladezyklus ab. Bei der Beladung wird bei einem Überschuss an elektrischer Energie zumindest eine Charge an Feststoff in die Reaktorvorrichtung gefördert, um dort beladen und, in dem zweiten Zustand vorliegend, anschließend in den anderen Speicherraum gefördert zu werden. Vorzugsweise liegt am Ende der Warmperiode der gesamte in der Feststoffspeichervorrichtung vorgehaltene Feststoff in dem zweiten Zustand vor. Sobald der Wärmebedarf ein Wärmeangebot durch z. B. erneuerbare Energiequellen übersteigt, kann während der Kaltperiode chargenweise nach und nach die thermische Entladung zur Wärmeversorgung der zu versorgenden Einheit stattfinden. Jedoch ist bevorzugt bedarfsweise auch (oder alternativ) ein alternierender Betrieb möglich, wobei nicht ein kompletter Zyklus abläuft, sondern nur ein Teil des Feststoffes, z. B. mindestens eine Charge, beladen und anschließend ein Teil des Feststoffes, z. B. mindestens eine Charge, entladen wird. Die Speicheranlage kann so flexibel und schnell auf Fluktuationen im Energieangebot und Bedarf reagieren. Ein derartiger Betrieb kann insbesondere in einem Übergangszeitraum zwischen einer Kalt- bzw. Warmperiode und einer Warm- bzw. Kaltperiode (z. B. Herbst oder Frühling) zweckmäßig sein.

Vorteilhafte Ausführungsvarianten des Verfahrens sind im Zusammenhang mit den vorteilhaften Ausbildungsvarianten in der Speicheranlage sinngemäß beschrieben.

Weiterhin kann vorteilhaft vorgesehen sein, dass der Reaktionsraum vor der Be- und/oder Entladung mit einer maximalen Füllhöhe des Feststoffes innerhalb des Reaktionsraums von 4/5, vorzugsweise 3/4 oder 2/3 einer Höhe des Reaktionsraums befüllt wird. Auf diese Weise kann, trotz einer gegebenenfalls auftretenden Volumenänderung des Feststoffes während der Hin- bzw. Rückreaktion, ein Austrag des Feststoffes in die Eintragsvorrichtung vermieden werden.

In bevorzugten Entladungsvarianten kann die bei der Entladung abgegebene Wärmeenergie mittels eines den Reaktionsraum in thermischem Kontakt (z. B. durch den Zwischenraum) umströmenden Wärmeträgerfluids aufgenommen und, insbesondere mittels einer Wärmeübertragungseinrichtung, zur Nutzung zur Verfügung gestellt werden. Zusätzlich oder alternativ kann bei der Entladung ein Überschuss an Reaktionsfluid in den Reaktionsraum zugegeben werden, welches unter Aufnahme von Wärmeenergie verdampft und anschließend abgesaugt und, insbesondere mittels der Wärmeübertragungseinrichtung, zur Nutzung zur Verfügung gestellt wird.

Nachfolgend wird die Erfindung anhand von Ausführungsbeispielen unter Bezugnahme auf die Zeichnungen näher erläutert. Es zeigen:
- Fig. 1A,: B ein Verfahrensschema mit einer Speicheranlage zur thermochemischen Speicherung von Energie während der elektrischen Beladung (Fig. 1A) und der thermischen Entladung (Fig. 1B),
- Fig. 2: eine schematische Schnittdarstellung einer Reaktorvorrichtung der Speicheranlage in axialer Draufsicht sowie einen mit der Reaktorvorrichtung in Strömungsverbindung stehenden Fluidkreislauf mit einer Förder-/ Wärmeübertragungseinheit,
- Fig. 3: eine seitliche Schnittdarstellung der mit Feststoff gefüllten Reaktorvorrichtung und
- Fig. 4: eine Seitenansicht der Reaktorvorrichtung gemäß Fig. 3.

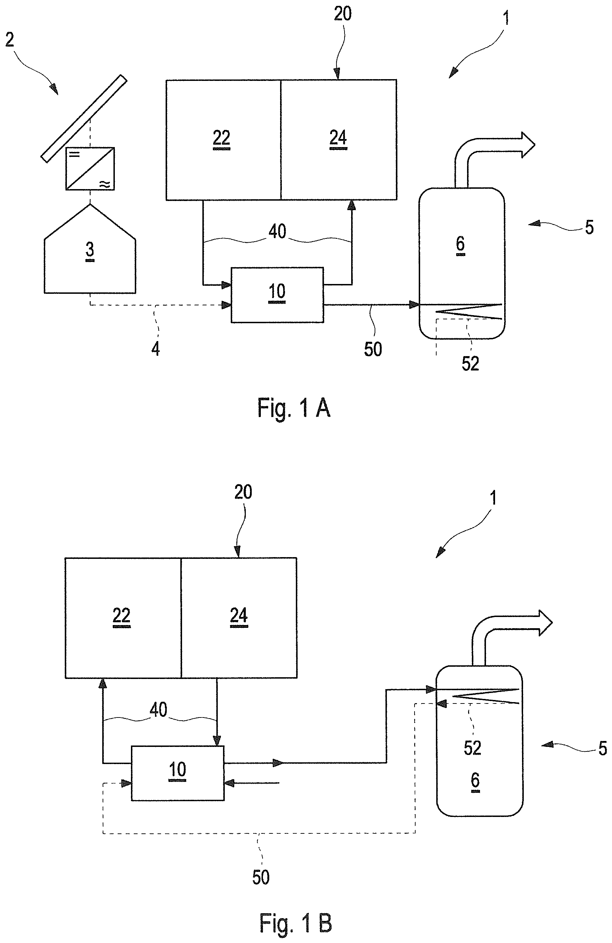

Fig. 1A und 1B zeigen eine Speicheranlage 1 zur thermochemischen Speicherung von Energie unter Verwendung eines Gas-Feststoff-Reaktionssystems. Die Speicheranlage 1 ist als Teil eines übergeordneten energetischen Systems dargestellt. Das übergeordnete System umfasst zumindest eine, insbesondere regenerative, Stromquelle 2, beispielsweise eine Fotovoltaik-Anlage. Die Stromquelle 2 ist hier beispielhaft mit einer elektrischen Stromsenke, umfassend zumindest einen elektrischen Verbraucher 3, elektrisch gekoppelt. Ein etwaiger Stromüberschuss 4 kann der Speicheranlage 1 zugeführt werden, die, hier beispielhaft unter Zwischenschaltung des Stromverbrauchers 3, ebenfalls mit der Stromquelle 2 in elektrischer Verbindung steht. Die Speicheranlage 1 umfasst weiterhin eine Wärmeübertragungseinrichtung 52, die mit einer Wärmesenke 5, hier beispielhaft umfassend eine Wärmespeichervorrichtung 6, thermisch gekoppelt ist.

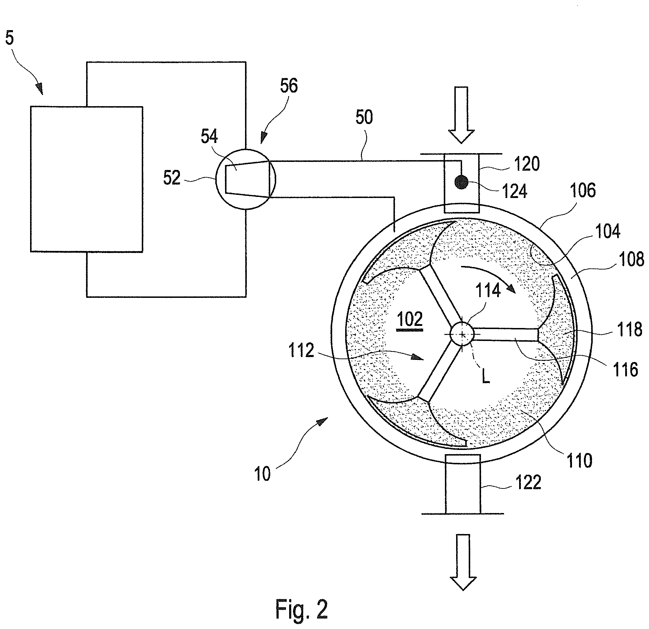

Das Prinzip der thermochemischen Speicherung basiert auf dem Einsatz reversibler Sorptionsprozesse innerhalb eines Gas-Feststoff-Systems, wobei die Speicheranlage 1 mittels elektrischer Energie (elektrisch) beladbar ist. Bei der Beladung (vgl. Fig. 1A) wird die elektrische Energie aus der Stromquelle 2 zunächst in Wärme umgewandelt. Die Wärmeenergie wird einem, insbesondere als Schüttgut vorliegenden (partikulären), Feststoff 110 (vgl. Fig. 2) zugeführt. In einem ersten, energetisch unbeladenen, Zustand wird der Feststoff 110 beispielsweise von einem Metallhydroxid, z. B. Calciumhydroxid, gebildet. Bei der Wärmeenergiezufuhr reagiert das Metallhydroxid in einer Hinreaktion unter Freisetzung eines Reaktionsfluids, beispielsweise Wasser bzw. Wasserdampf, zu einem zweiten (beladenen) Zustand, hier einem Metalloxid (z. B. Calciumoxid), in welchem der Feststoff 110 ein höheres chemisches Potenzial aufweist. Das Reaktionsfluid wird von dem Feststoff 110 getrennt gelagert, insbesondere wird der Wasserdampf von dem Metalloxid getrennt kondensiert. Das Metalloxid kann als Feststoff 110 gelagert werden.

Zur thermischen Entladung (vgl. Fig. 1B) wird der Feststoff 110 bzw. das Metalloxid wieder mit dem Reaktionsfluid in Verbindung gebracht. Nun findet die exotherme Rückreaktion statt, wobei die freiwerdende Reaktionswärme aus der Speicheranlage 1 ausgekoppelt und zur Nutzung der Wärmesenke 5 zugeführt werden kann.

Die Speicheranlage 1 umfasst eine Reaktorvorrichtung 10, in der die elektrische Beladung unter Ablauf der Hinreaktion und die thermische Entladung unter Ablauf der Rückreaktion stattfinden. Ferner weist die Speicheranlage 1 eine separate, von der Reaktorvorrichtung 10 getrennte Feststoffspeichervorrichtung 20 auf, die zwei voneinander getrennte Speicherräume 22, 24 umfasst. Innerhalb der Feststoffspeichervorrichtung 20 kann der Feststoff 110 getrennt von der Reaktorvorrichtung 10 und jeweils separat in dem ersten Zustand (in dem Speicherraum 22) und in dem zweiten Zustand (in dem Speicherraum 24) gelagert werden. Durch die Entkopplung der Speicherung von der Reaktorvorrichtung 10 können die entsprechenden Komponenten getrennt voneinander dimensioniert werden. So ergibt sich in der Regel eine vergleichsweise kompakte Reaktorvorrichtung 10, da darin nicht der gesamte benötigte Feststoffbedarf vorgehalten werden muss.

Zum Transport des Feststoffes 110 zwischen der Feststoffspeichervorrichtung 20 und der Reaktorvorrichtung 10 umfasst die Speicheranlage 1 eine Feststoffförderanordnung 40. Die Förderanordnung 40 kann beispielsweise durch eine Vakuumfördereinrichtung, oder eine andere zur Förderung von partikulärem Feststoff 110 geeignete Fördereinrichtung gebildet sein.

Zur Auskopplung der Wärmeenergie aus der Reaktorvorrichtung 10 und/oder zum Zubringen des Reaktionsfluids für die Rückreaktion weist die Speicheranlage 1 einen Fluidkreislauf 50 mit einer Wärmeübertragungseinrichtung 52 und einer (Fluid-) Fördereinrichtung 54 (vgl. Fig. 2) auf. Die Wärmeübertragungseinrichtung 52 ist vorzugsweise in Wärmeübertragungsverbindung zu der Wärmesenke 5 bzw. der Wärmespeichervorrichtung 6 angeordnet, die z. B. eine Kombispeichereinrichtung umfasst.

Fig. 2 zeigt einen Teil der Speicheranlage 1 mit der Reaktorvorrichtung 10 in axialer Draufsicht auf einen Querschnitt orthogonal zu einer Mittellängsachse L. Gemäß einem Kerngedanken der Erfindung ist die Reaktorvorrichtung 10 hinsichtlich des Leistungseintrages optimiert, der im Wesentlichen von dem Wärmeübergang bzw. dem Wärmeübergangskoeffizienten auf den insbesondere als Schüttgut vorliegenden Feststoff 110 abhängt. Dazu ist die Reaktorvorrichtung 10 hier beispielshaft zylindrisch ausgebildet und umfasst einen zylindrischen, von einem Innenmantel 104 umgebenen Reaktionsraum 102 zur Aufnahme des Feststoffes 110 während der Hin- und/oder Rückreaktion. Der Reaktionsraum 102 ist symmetrisch um eine Mittellängsachse L angeordnet, die z. B. (im Wesentlichen) horizontal oder vertikal verlaufen kann.

Zum Zwecke der Verbesserung des Wärmeübergangs ist in dem Reaktionsraum 102 eine Mischeinrichtung angeordnet, mittels der der Feststoff 110 während der Hin- und/oder Rückreaktion umgelagert, insbesondere (je nach Drehzahl) verwirbelt, werden kann. Durch die Umlagerung bzw. Verwirbelung in Art einer mechanischen Wirbelschicht treten während der Beladung eine Vielzahl von Feststoff-Partikeln wiederholt mit den wärmeübertragenden Flächen innerhalb des Reaktionsraums 102 in thermischen Kontakt. Dadurch kann die Leistungsdichte z. B. im Vergleich zu Festbettreaktoren bei vergleichbarer Temperaturdifferenz wesentlich erhöht werden.

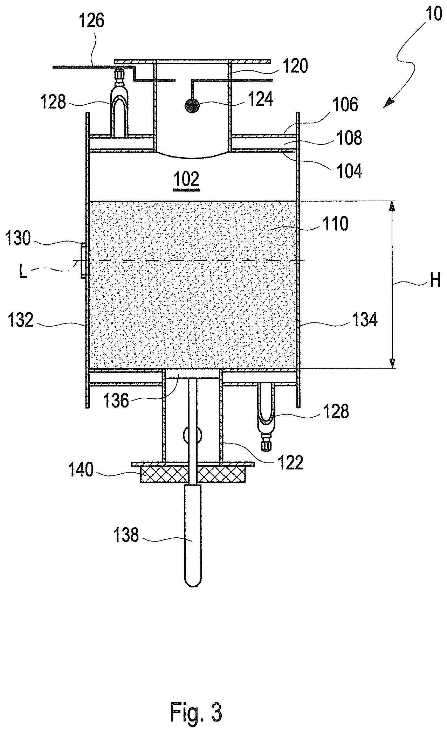

Die Mischeinrichtung weist eine auf der Mittellängsachse L verlaufende Welle 114 und einer um die Welle 114 rotierbare Rotationsanordnung 112 auf. Die Welle 114 ist mittels einer gasdicht ausgebildeten Lagereinrichtung 130 (vgl. Fig. 3) insbesondere im Wesentlichen horizontal gelagert. Die Rotationsanordnung umfasst hier beispielhaft drei sich radial erstreckender Arme 116, an deren radial nach außen gerichteten Enden zur Bildung einer Art Schaufelrad jeweils eine Schaufelvorrichtung 118 angeordnet ist. Die Arme 116 mit den Schaufelvorrichtungen 118 erstrecken sich derart bis an die Innenwand des Innenmantels 104, dass die Rotationsanordnung 112 ohne Wandkontakt rotierbar ist. Durch die Schaufelvorrichtungen 118 ist während der Rotation eine vergleichsweise große Menge an Feststoff 110 umlagerbar. Durch eine derartige Ausbildung der Mischeinrichtung kann eine Agglomeration des Feststoffes 110 verhindert oder diese gegebenenfalls direkt wieder aufgebrochen werden. Neben einem verbesserten Wärmeübergang erleichtert dies den Abtransport des Feststoffes 110 durch die Förderanordnung 40, wobei die Rotationsanordnung 112 eine vollständige automatisierte Entleerung unterstützen kann.

Die Reaktorvorrichtung 10 weist eine Wärmeeintragungsanordnung auf, die vorzugsweise den Innenmantel 104 und/oder zumindest einen Teil der Mischeinrichtung umfasst. Dabei sind insbesondere der Innenmantel 104, z. B. auch umfassend zwei Stirnseiten 132, 134 (vgl. Fig. 3), und/oder z. B. die Arme 116 und/oder Schaufelvorrichtungen 118 für eine konstante, maximale Beladetemperaturregelbarkeit, elektrisch und/oder induktiv beheizbar ausgebildet. Zur elektrischen Beheizung des Innenmantels können beispielsweise auf dessen Außenwand elektrische Heizelemente angebracht sein. Auch eine Infrarot- und/oder Mikrowellenbestrahlung für den Wärmeeintrag ist z. B. möglich.

In der in Fig. 2 gezeigten Ausbildungsvariante weist die Reaktorvorrichtung 10 einen zylindrischen Außenmantel 106 auf, der zumindest den zylindrischen Teil, ggf. auch die beiden Stirnseiten 132, 134 des Innenmantels 104 unter Bildung eines fluiddurchströmbaren Zwischenraums 108 umschließt. Das (Wärmeträger-)Fluid kann dem Zwischenraum 108 über eine Anschlussvorrichtung 128 (vgl. Fig. 3), die insbesondere einen Stutzen umfasst, zugeführt und z. B. über eine weitere Anschlussvorrichtung 128 (vgl. Fig. 3), die insbesondere einen weiteren Stutzen umfasst, diesem entnommen werden. So kann der Reaktionsraum 102 z. B. während der thermischen Entladung für den Wärmeaustrag von einem Wärmeträgerfluid umströmt werden. In Kombination mit der elektrischen Beheizbarkeit des Innenmantels 104 sind etwaige auf der Außenfläche des Innenmantels 104 angeordnete, elektrische Heizelemente entsprechend fluiddicht ausgebildet.

Die Reaktorvorrichtung 10 weist eine an deren Oberseite, im zylindrischen Teil der des Außen- bzw. Innenmantels 106, 104, angeordnete Eintragvorrichtung 120 auf, mittels der der Feststoff 110 unter Schwerkrafteinwirkung in den Reaktionsraum 102 eingebracht werden kann. Eine Austragvorrichtung 122 ist vorzugsweise an der der Oberseite gegenüberliegenden Unterseite, vorzugsweise an der tiefsten Stelle des Reaktionsraums 10, z. B. der Eintragvorrichtung 120 gegenüberliegend angeordnet. Zur Vermeidung von Brückenbildung und Verstopfungen der Eintragvorrichtung 120 und/oder der Austragvorrichtung 122 sind diese insbesondere als zylindrische Öffnungen und/oder Stutzen ausgebildet und weisen einen Mindestdurchmesser von 50 mm, vorzugsweise von 70 mm, z. B. von 76 mm auf.

Fig. 2 zeigt weiterhin schematisch eine Ausführungsvariante des Fluidkreislaufs 50. Dabei umfasst der Fluidkreislauf 50 neben der Wärmeübertragungseinrichtung 52 die Fördereinrichtung 54, die insbesondere als Pumpe und/oder Verdichter ausgebildet ist. Die Wärmeübertragungseinrichtung 52 und die Fördereinrichtung 54 sind, für eine kompakte Bauweise mit geringer Komponentenanzahl, in einer Förder-/Wärmeübertragungseinheit 56 zusammengefasst. Als besonders effizient hat sich herausgestellt, wenn die Förder-/Wärmeübertragungseinheit 56 eine Ringpumpenanordnung umfasst bzw. von dieser gebildet ist. Hierbei kann vorteilhafterweise das Kühlfluid für die Ringpumpenanordnung als (zweites) Wärmeträgerfluid fungieren, welches die Wärme an die Wärmesenke 5, beispielsweise an die Wärmespeichervorrichtung 6, überträgt. Effizienterweise wird im Betrieb das Wärmeträgerfluid und/oder Reaktionsfluid aus der Reaktorvorrichtung 10 innerhalb der Ringpumpenanordnung kondensiert, wobei zusätzlich die Kondensationswärme genutzt werden kann. Vorteilhafterweise ist das Kühlfluid bzw. (zweite) Wärmeträgerfluid aus dem gleichen Fluid gebildet wie das Reaktionsfluid bzw. Wärmeträgerfluid, z. B. aus Wasser. So kann das Reaktionsfluid nach der Kondensation von dem Kühlfluid aufgenommen werden und die beide Fluide brauchen nicht voneinander separiert zu werden.

Mittels des Fluidkreislaufs 50 ist das Reaktionsfluid in den Reaktionsraum 102 einbringbar und/oder aus diesem abführbar. Bei der in Fig. 2 gezeigten Variante steht der Fluidkreislauf 50 mit dem Zwischenraum 108 in Strömungsverbindung. Dabei ist z. B. zunächst das Reaktionsfluid in Funktion als Wärmeträgerfluid in den Zwischenraum 108 einbringbar, z. B. mittels einer Anschlussvorrichtung 128 (vgl. Fig. 3). Nach Durchströmen des Zwischenraums 108 kann das Reaktionsfluid, z. B. über eine weitere Anschlussvorrichtung 128, dem Fluidkreislauf 50 und darüber der Förder-/Wärmeübertragungseinheit 56 zugeführt werden. Dort gibt es insbesondere während der thermischen Entladung Wärme ab und kondensiert dabei. Das nun flüssige Reaktionsfluid wird anschließend vorzugsweise einer Fluideintrageinrichtung 124 der Reaktorvorrichtung 10 zugeführt und darüber zur Reaktion mit dem Feststoff 110 in den Reaktionsraum 102 eingebracht.

Die Fluideintrageinrichtung 124 ist vorzugsweise außerhalb des Reaktionsraums 102, insbesondere in der Eintragvorrichtung 120 angeordnet. Um eine Verstopfung der Fluideintrageinrichtung 124 zu verhindern, hatte sich als vorteilhaft herausgestellt, wenn der Abstand zu dem Reaktionsraum 102 beispielsweise mindestens 50 mm, vorzugsweise mindestens 70, z. B. 80 mm beträgt. Die Fluideintrageinrichtung 124 umfasst, für eine optimierte Verteilung des Reaktionsfluids auf den Feststoff 110, eine Zerstäubereinrichtung, insbesondere eine Zerstäuberdüse.

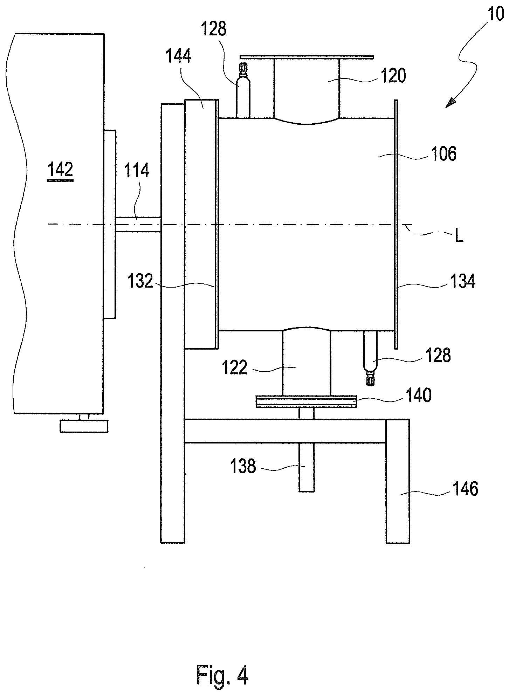

Weitere Einzelheiten der Reaktorvorrichtung 10 sind aus den Figuren 3 und 4 ersichtlich. Wie Fig. 3 zeigt, kann die Reaktorvorrichtung 10 weiterhin eine Anschlussvorrichtung 126 als Strömungsverbindung zu dem Reaktionsraum 102 umfassen, an welchen der Fluidkreislauf 50 angeschlossen sein kann. Mittels der Anschlussvorrichtung 126 ist beispielsweise bei der Hinreaktion freiwerdendes Reaktionsfluid und/oder während der Rückreaktion verdampfendes, überschüssiges Reaktionsfluid aus dem Reaktionsraum 102 entnehmbar. Die Anschlussvorrichtung 126 ist vorzugsweise außerhalb des Reaktionsraums 102, insbesondere in der Eintragvorrichtung 120 angeordnet. Um eine Verstopfung der Anschlussvorrichtung 126 zu vermeiden, hat sich beispielsweise ein Abstand von mindestens 50 mm, vorzugsweise mindestens 70 mm, z. B. 80 mm zu dem Reaktionsraum 102 als vorteilhaft erwiesen.

In der Austragvorrichtung 122 ist eine insbesondere pneumatische Schließeinheit angeordnet. Die Schließeinheit umfasst eine tellerartige Schließeinrichtung 136 und eine Stelleinrichtung 138, mittels der der Reaktionsraum 102 während der Hin- und/oder Rückreaktion fluiddicht verschließbar ist. In einer vorteilhaft hitzebeständigen Ausbildung ist die Stelleinrichtung 138 insbesondere unter Zwischenordnung eines Isoliermittels 140, z. B. einer Keramikscheibe, thermisch entkoppelt von der Reaktorvorrichtung 10 angeordnet.

Aus Fig. 3 ist eine beispielhafte Füllhöhe H des Feststoffes 110 während der Be- bzw. Entladung ersichtlich. Die Füllhöhe H ist vorzugsweise geringer als die Höhe des Reaktionsraums 102 und beträgt (in thermisch beladenem, d.h. von Reaktionsfluid entladenem Zustand des Feststoffes 110) beispielsweise maximal 3/4, vorzugsweise 2/3 der (maximalen) Höhe, z. B. des Durchmessers, des Reaktionsraums 102, um einen Austrag des Feststoffes aus dem Reaktionsraum 102 in die Eintragvorrichtung 120 zu vermeiden.

Wie Fig. 4 zeigt, ist eine Antriebseinrichtung 142 der Mischeinrichtung von dem Reaktionsraum 102 thermisch entkoppelt angeordnet. Dabei ist beispielsweise die Welle 114 über eine gewisse Distanz, beispielsweise über mindestens 100 mm, ohne Isolierung ausgebildet, um eine Luftkühlung zu erreichen. Auf diese Weise kann die Reaktorvorrichtung 10 ohne Schädigung der Antriebseinrichtung 142 mit hohen Temperaturen, z. B. bis zu 600 °C oder höher, betrieben werden. Zu diesem Zweck dient auch ein Isoliermittel 144, insbesondere eine zumindest 50 mm dicke Keramikscheibe, das zwischen einer Tragvorrichtung 146 der Reaktorvorrichtung 10 und der Stirnseite 132 angeordnet ist.

Die Speicheranlage 1 kann insbesondere für eine Langzeitspeicherung zur Wärmeversorgung einer mit Wärme zu versorgenden Einheit dimensioniert sein. Die Beladung findet z. B. (überwiegend) während einer Warmperiode, insbesondere einer Sommersaison, und die Entladung während einer Kaltperiode, insbesondere einer Wintersaison statt. Dabei sind insbesondere die Feststoffspeichervorrichtung 20 und/oder die Reaktorvorrichtung 10 unter Berücksichtigung der bereitzustellenden Leistung entsprechend ausgelegt bzw. dimensioniert. Während der Warmperiode kann insbesondere ein (vollständiger) elektrischer Beladezyklus und innerhalb der Kaltperiode ein (vollständiger) thermischer Entladezyklus ablaufen. Während eines Zyklus wird vorzugsweise der gesamte Feststoff 110 innerhalb der Speicheranlage 1 be- bzw. entladen.

Jedoch ist auch ein alternierender Betrieb der Speicheranlage 1 möglich, wobei nicht ein kompletter Zyklus abläuft, sondern nur ein Teil des Feststoffes 110, z. B. mindestens eine Charge an Feststoff 110, beladen und anschließend ein Teil des Feststoffes, z. B. mindestens eine Charge an Feststoff 110, entladen wird. Die Speicheranlage 1 kann so flexibel und schnell auf Fluktuationen im Energieangebot und Bedarf reagieren. Ein derartiger Betrieb kann insbesondere in einem Übergangszeitraum zwischen einer Kalt- bzw. Warmperiode und einer Warm- bzw. Kaltperiode (z. B. Herbst oder Frühling) zweckmäßig sein.

Im Betrieb der Speicheranlage 1 wird in der Warmphase nach und nach vorzugsweise der gesamte Feststoff-Inhalt des Speicherraums 22 von dem entladenen, ersten Zustand in den beladenen, zweiten Zustand überführt. Dazu wird jeweils bei einem zur Verfügung stehenden Überschuss an elektrischer Energie zumindest eine Charge an Feststoff 110, entsprechend einer Füllmenge des Reaktionsraums 110, in die Reaktorvorrichtung 10 gefördert. Dort findet unter Freiwerden und Abführen des Reaktionsfluids die elektrische Beladung des Feststoffes 110 statt. Bei Calciumhydroxid als Feststoff wird dieser z. B. auf Temperaturen bis 600 °C erhitzt, wobei ab ca. 450° die endotherme Hinreaktion (Dehydratisierung) stattfindet. Das abgeführte Reaktionsfluid kann z. B. der Wärmeübertragungseinrichtung 52 zur energetischen Nutzung zugeführt werden. Nach dem Beladevorgang wird der, nun in dem zweiten Zustand vorliegende, Feststoff 110 in den anderen Speicherraum 24 gefördert und dort gelagert. Je nach Energieverfügbarkeit können mehrere Chargen hintereinander beladen werden. Vorzugsweise liegt am Ende der Warmperiode der gesamte in der Feststoffspeichervorrichtung 20 vorgehaltene Feststoff 110 in dem zweiten Zustand vor.

Während der Kaltperiode, z. B. sobald der Wärmebedarf ein Wärmeangebot durch erneuerbare Energiequellen übersteigt, kann die Speicheranlage 1 thermisch entladen werden. Dies kann insbesondere chargenweise geschehen, je nach Wärmebedarf der zu versorgenden Einheit. Dazu wird bei Wärmebedarf zumindest eine Charge an beladenem Feststoff 110 in die Reaktorvorrichtung 10 gefördert. Dort findet unter Zugabe des insbesondere flüssigen, zerstäubten Reaktionsfluids in den Reaktionsraum 102 die thermische Entladung des Feststoffes 110 statt. Die freigesetzte Wärme kann durch ein den Zwischenraum 108 durchströmendes Wärmeträgerfluid aufgenommen und z. B. mittels der Wärmeübertragungseinrichtung 52 zur Nutzung zur Verfügung gestellt werden. Zusätzlich oder alternativ kann auch ein Überschuss an Reaktionsfluid in den Reaktionsraum 102 zugegeben werden. Das überschüssige Reaktionsfluid verdampft und kann anschließend insbesondere mittels der Anschlussvorrichtung 126 abgesaugt und mittels der Wärmeübertragungseinrichtung 52 zur Nutzung zur Verfügung gestellt werden. Nach dem Entladevorgang wird der, nun wieder in dem ersten Zustand vorliegende, Feststoff 110 in den Speicherraum 22 gefördert und dort bis zum Einsatz beim nächsten Zyklus gelagert. Je nach Wärmebedarf können mehrere Chargen hintereinander entladen werden. Vorzugsweise liegt am Ende der Kaltperiode der gesamte in der Feststoffspeichervorrichtung 20 vorgehaltene Feststoff 110 in dem ersten Zustand vor.

Zusammenfassend wird durch die erfindungsgemäße Ausbildung eine Speicheranlage 1 bereitgestellt, die mit einer hohen Leistungsdichte effizient betreibbar ist, wobei der Prozess aufgrund des geringen Störpotenzials gut automatisierbar ist.

## Patentansprüche

1. Speicheranlage (1) zur thermochemischen Speicherung von Energie, mit einer Reaktorvorrichtung (10) umfassend einen von einem Innenmantel (104) eingefassten Reaktionsraum (102), innerhalb dessen ein Feststoff (110) während einer Beladung in einer Hinreaktion unter Zufuhr von Wärmeenergie von einem ersten Zustand unter Abgabe eines Reaktionsfluids in einen zweiten Zustand überführbar ist und während einer Entladung in einer Rückreaktion unter Abgabe von Wärmeenergie von dem zweiten Zustand unter Aufnahme des Reaktionsfluids in den ersten Zustand überführbar ist, wobei der Reaktionsraum (102) eine Mischeinrichtung umfasst,
**dadurch gekennzeichnet,**
**dass** mittels der Mischeinrichtung der Feststoff (110) während der Hin- und/oder Rückreaktion verwirbelbar ist, so dass während der Beladung eine Vielzahl von Feststoff-Partikeln wiederholt mit wärmeübertragenden Flächen des Reaktionsraums in thermischen Kontakt tritt.

2. Speicheranlage (1) nach Anspruch 1,
**dadurch gekennzeichnet,**
**dass** eine Antriebseinrichtung (142) der Mischeinrichtung, insbesondere durch eine entsprechende Anordnung einer Welle (114), von dem Reaktionsraum (102) thermisch entkoppelt angeordnet ist und insbesondere,
**dass** der Reaktionsraum (102) um eine Mittellängsachse (L) angeordnet ist und die Mischeinrichtung die auf der Mittellängsachse (L) verlaufende Welle (114) und eine um die Welle (114) rotierbare Rotationsanordnung (112) mit zumindest einem sich radial erstreckenden Arm (116) aufweist.

3. Speicheranlage (1) nach Anspruch 2,
**dadurch gekennzeichnet,**
**dass** der Innenmantel (104) zylindrisch ausgebildet ist und
**dass** sich das radial nach außen gerichtete Ende des Arms/der Arme (116) bis an die Innenwand des Innenmantels (104) erstreckt, wobei insbesondere an dem Ende des Arms/der Arme (116) eine Schaufelvorrichtung (118) angeordnet bzw. das Ende von der Schaufelvorrichtung (118) gebildet ist.

4. Speicheranlage (1) nach einem der vorhergehenden Ansprüche,
**dadurch gekennzeichnet,**
**dass** die Reaktorvorrichtung (10) eine Wärmeeintragungsanordnung aufweist,
wobei zumindest ein Teil des Innenmantels (104) und/oder ein Teil der Mischeinrichtung elektrisch und/oder induktiv beheizbar sind und/oder
wobei dem Reaktionsraum (102) zugesetzte Strukturen und/oder der Feststoff (110) induktiv und/oder mittels Bestrahlung beheizbar ist/sind.

5. Speicheranlage (1) nach einem der vorhergehenden Ansprüche,
**dadurch gekennzeichnet,**
**dass** die Reaktorvorrichtung (10) einen Außenmantel (106) aufweist, der zumindest einen Teil des Innenmantels (104) unter Bildung eines fluiddurchströmbaren Zwischenraums (108) umgibt.

6. Speicheranlage (1) nach einem der vorhergehenden Ansprüche,
**dadurch gekennzeichnet,**
**dass** die Reaktorvorrichtung (10) eine Eintragvorrichtung (120) zum Eintrag des Feststoffes (110) und eine, insbesondere der Eintragvorrichtung (120) gegenüberliegend angeordnete, Austragvorrichtung (122) aufweist und
**dass** die Reaktorvorrichtung (10) eine Anschlussvorrichtung (126) mit einem Fluideinlass zur Abführung des Reaktionsfluids aus dem Reaktionsraum (102) aufweist, wobei insbesondere der Fluideinlass außerhalb des Reaktionsraums (102), z. B. innerhalb der Eintragvorrichtung (120), angeordnet ist.

7. Speicheranlage (1) nach Anspruch 6,
**dadurch gekennzeichnet,**
**dass** die Eintragvorrichtung (120) und/oder die Austragvorrichtung (122) zylindrisch ausgebildet sind und einen Mindestdurchmesser von 50 mm, vorzugsweise einen Mindestdurchmesser von 70 mm, insbesondere einen Mindestdurchmesser von 76 mm, aufweisen.

8. Speicheranlage (1) nach einem der vorhergehenden Ansprüche,
**dadurch gekennzeichnet,**
**dass** die Reaktorvorrichtung (10) eine Fluideintrageinrichtung (124) mit einem Fluidauslass aufweist, mittels dessen das, insbesondere für die Rückreaktion benötigte, Reaktionsfluid in den Reaktionsraum (102) einbringbar ist, wobei der Fluidauslass zur Zerstäubung des Reaktionsfluids ausgebildet ist, und dass der Fluidauslass außerhalb des Reaktionsraums (102), insbesondere innerhalb der Eintragvorrichtung (120), angeordnet ist, wobei der Abstand vorzugsweise mindestens 30 mm, besonders bevorzugt mindestens 50 mm, z. B. 80 mm beträgt.

9. Speicheranlage (1) nach einem der vorhergehenden Ansprüche,
**dadurch gekennzeichnet,**
**dass** die Reaktorvorrichtung (10) eine pneumatische Schließeinheit mit einer, insbesondere in der Austragvorrichtung (122) angeordneten, Schließeinrichtung (136) und einer Stelleinrichtung (138) umfasst, mittels der der Reaktionsraum (102) während der Hin- und/oder Rückreaktion fluiddicht verschließbar ist, wobei die Stelleinrichtung (138) von dem Reaktionsraum (102) thermisch entkoppelt ist.

10. Speicheranlage (1) nach einem der vorhergehenden Ansprüche,
**dadurch gekennzeichnet,**
**dass** die Speicheranlage (1) einen Fluidkreislauf (50) mit einer Wärmeübertragungseinrichtung (52) und einer Fördereinrichtung (54) umfasst, mittels dessen Reaktionsfluid und/oder Wärmeträgerfluid aus der Reaktorvorrichtung (10), insbesondere aus dem Reaktionsraum (102) und/oder aus dem Zwischenraum (108), förderbar und unter Wärmeabgabe durch die Wärmeübertragungseinrichtung (52) leitbar ist und
**dass** die Wärmeübertragungseinrichtung (52) und Fördereinrichtung (54) insbesondere in einer Förder-/Wärmeübertragungseinheit (56) angeordnet sind, wobei die Wärmeübertragungseinrichtung (52) zur Wärmeübertragung an ein zweites, insbesondere durchströmendes, Wärmeträgerfluid ausgebildet ist.

11. Speicheranlage (1) nach Anspruch 10,
**dadurch gekennzeichnet,**
**dass** die Förder-/Wärmeübertragungseinheit (56) als Ringpumpenanordnung ausgebildet ist, wobei im Betrieb das zweite Wärmeträgerfluid durch ein Kühlfluid der Ringpumpenanordnung gebildet ist.

12. Speicheranlage (1) nach einem der vorhergehenden Ansprüche,
**dadurch gekennzeichnet,**
**dass** die Speicheranlage (1) zwei getrennte Speicherräume (22, 24), zur separaten Speicherung des Feststoffes (110) in dem ersten Zustand und in dem zweiten Zustand außerhalb des Reaktionsraums (102) aufweist.

13. Speicheranlage (1) nach einem der vorhergehenden Ansprüche,
**dadurch gekennzeichnet,**
**dass** die Speicheranlage (1) für eine Langzeitspeicherung zur Wärmeversorgung einer mit Wärme zu versorgenden Einheit ausgebildet ist, wobei die Beladung während einer Warmperiode und die Entladung während einer Kaltperiode stattfinden kann.

14. Verfahren zur thermochemischen Speicherung von Energie mit einer Speicheranlage (1) nach einem der vorhergehenden Ansprüche, bei dem innerhalb eines Reaktionsraums (102) einer Reaktorvorrichtung (10) ein Feststoff (110) während einer Beladung in einer Hinreaktion unter Zufuhr von Wärmeenergie von einem ersten Zustand unter Abgabe eines Reaktionsfluids in einen zweiten Zustand überführt wird und während einer Entladung in einer Rückreaktion unter Abgabe von Wärmeenergie von dem zweiten Zustand unter Aufnahme des Reaktionsfluids in den ersten Zustand überführt wird, wobei in dem Reaktionsraum (102) der Feststoff (110) mittels einer Mischeinrichtung während der Hin- und/oder Rückreaktion umgelagert wird,
**dadurch gekennzeichnet,**
**dass** der Feststoff während der Hin- und/oder Rückreaktion mittels der Mischeinrichtung verwirbelt wird, wobei während der Beladung eine Vielzahl von Feststoff-Partikeln wiederholt mit wärmeübertragenden Flächen des Reaktionsraums in thermischen Kontakt tritt.

15. Verfahren nach Anspruch 14,
**dadurch gekennzeichnet,**
**dass** der Reaktionsraum (102) vor der Be- und/oder Entladung mit einer maximalen Füllhöhe (H) des Feststoffes (110) innerhalb des Reaktionsraums (102) von 4/5, vorzugsweise 3/4 oder 2/3 einer Höhe des Reaktionsraums (102) befüllt wird und insbesondere
**dass** die bei der Entladung abgegebene Wärmeenergie mittels eines den Reaktionsraum (102) in thermischem Kontakt umströmenden Wärmeträgerfluids aufgenommen und, insbesondere mittels einer Wärmeübertragungseinrichtung (52), zur Nutzung zur Verfügung gestellt wird und/oder
**dass** bei der Entladung ein Überschuss an Reaktionsfluid in den Reaktionsraum (102) zugegeben wird, welches unter Aufnahme von Wärmeenergie verdampft und anschließend abgesaugt und, insbesondere mittels der Wärmeübertragungseinrichtung (52) zur Nutzung zur Verfügung gestellt wird.

## Claims

1. A storage system (1) for the thermochemical storage of energy, having a reactor device (10) comprising a reaction chamber (102) enclosed by an inner jacket (104), within which a solid (110) can be made to transition during a charging process from a first state to a second state in a forward reaction with the addition of thermal energy, releasing a reaction fluid, and can be made to transition from the second state into the first state during a discharge process in a reverse reaction, releasing thermal energy and taking up the reaction fluid, the reaction chamber (102) comprising a mixing device,
**characterized in that**
by means of the mixing device, the solid (110) can be fluidized during the forward and/or reverse reaction, such that a great number of the solid particles repeatedly come into thermal contact with heat-transferring surfaces of the reaction chamber during the charging process.

2. The storage system (1) according to claim 1,
**characterized in that**
a drive device (142) of the mixing device is arranged thermally decoupled from the reaction chamber (102), in particular by means of a corresponding arrangement of a shaft (114), and in particular
**in that** the reaction chamber (102) is arranged around a central longitudinal axis (L), and the mixing device has the shaft (114) extending on the central longitudinal axis (L) and a rotational arrangement (112) rotatable about the shaft (114), with at least one radially extending arm (116).

3. The storage system (1) according to claim 2,
**characterized in that**
the inner jacket (104) is cylindrical, and
**in that** the radially outer end of the arm(s) (116) extends up to the inner wall of the inner jacket (104), wherein a paddle device (118) is arranged in particular at the end of the arm(s) (116). or the end is formed by the paddle device (118).

4. The storage system (1) according to any of the preceding claims,
**characterized in that**
the reactor device (10) has a heat input arrangement,
wherein at least a part of the inner jacket (104) and/or a part of the mixing device is heatable electrically and/or inductively, and/or
wherein structures added to the reaction chamber (102) and/or the solid (110) can be heated inductively and/or by means of irradiation.

5. The storage system (1) according to any of the preceding claims,
**characterized in that**
the reactor device (10) has an outer jacket (106) which surrounds at least a part of the inner jacket (104) to form a jacket space (108) through which fluid can flow.

6. The storage system (1) according to any of the preceding claims,
**characterized in that**
the reactor device (10) has an input device (120) for feeding the solid (110), and a discharge device (122) arranged opposite the input device (120), and
**in that** the reactor device (10) has a connection device (126) with a fluid inlet for discharging the reaction fluid from the reaction chamber (102), wherein in particular the fluid inlet is arranged outside the reaction chamber (102), e.g., within the input device (120).

7. The storage system (1) according to claim 6,
**characterized in that**
the input device (120) and/or the discharge device (122) are cylindrical and have a minimum diameter of 50 mm, preferably a minimum diameter of 70 mm, in particular a minimum diameter of 76 mm.

8. The storage system (1) according to any of the preceding claims,
**characterized in that**
the reactor device (10) has a fluid input device (124) with a fluid outlet, by means of which the reaction fluid, which is required in particular for the reverse reaction, can be introduced into the reaction chamber (102), the fluid outlet being designed to atomize the reaction fluid, and
**in that** the fluid outlet is arranged outside the reaction chamber (102), in particular within the input device (120), wherein the distance is preferably at least 30 mm, particularly preferably at least 50 mm, e.g., 80 mm.

9. The storage system (1) according to any of the preceding claims,
**characterized in that**
the reactor device (10) comprises a pneumatic closing unit with a closing device (136), in particular arranged in the discharge device (122), and an actuating device (138), by means of which the reaction chamber (102) can be closed in a fluid-tight manner during the forward and/or reverse reaction, wherein the actuating device (138) is thermally decoupled from the reaction chamber (102).

10. The storage system (1) according to any of the preceding claims,
**characterized in that**
the storage system (1) comprises a fluid circuit (50) with a heat transfer device (52) and a conveying device (54), by means of which reaction fluid and/or heat transfer fluid can be conveyed out of the reactor device (10), in particular out of the reaction chamber (102) and/or out of the jacket space (108), and can be guided through the heat transfer device (52), releasing heat, and
**in that** the heat transfer device (52) and the conveying device (54) are arranged in particular in a conveying/heat transfer unit (56), wherein the heat transfer device (52) is designed for heat transfer to a second heat transfer fluid, in particular one which flows through it.

11. The storage system (1) according to claim 10,
**characterized in that**
the conveying/heat transfer unit (56) is designed as a ring pump arrangement, wherein during operation the second heat transfer fluid is formed by a cooling fluid of the ring pump arrangement.

12. The storage system (1) according to any of the preceding claims,
**characterized in that**
the storage system (1) has two separate storage chambers (22, 24) for separately storing the solid (110) in the first state and in the second state outside the reaction chamber (102).

13. The storage system (1) according to any of the preceding claims,
**characterized in that**
the storage system (1) is designed for long-term storage, for the purpose of supplying heat to a unit to be supplied with heat, wherein the charging process can take place during a warm period and the discharge process can take place during a cold period.

14. A method for the thermochemical storage of energy with a storage system (1) according to any of the preceding claims, in which a solid (110) is made to transition within a reaction chamber (102) of a reactor device (10) from a first state to a second state during a charging process in a forward reaction, with the addition of thermal energy and releasing reaction fluid, and is made to transition from the second state to the first state during a discharge process in a reverse reaction, releasing thermal energy and taking up the reaction fluid, wherein the solid (110) is moved in the reaction chamber (102) by means of a mixing device during the forward and/or reverse reaction,
**characterized in that**
the solid is fluidized during the forward and/or reverse reaction by means of the mixing device, wherein a great number of solid particles repeatedly come into thermal contact with heat-transferring surfaces of the reaction chamber during the charging process.

15. The method according to claim 14,
**characterized in that**
the reaction chamber (102) is filled with a maximum fill level (H) of the solid (110) within the reaction chamber (102) of 4/5, preferably 3/4 or 2/3, of a height of the reaction chamber (102) before the charging process and/or discharge process, and in particular
**in that** the thermal energy released during the discharge process is absorbed by means of a heat transfer fluid flowing around the reaction chamber (102) in thermal contact therewith, and is made available for use, in particular by means of a heat transfer device (52), and/or
**in that** an excess of reaction fluid is added to the reaction chamber (102) during the discharge process, said excess reaction fluid being evaporated, absorbing thermal energy, and then being suctioned off, in particular made available for use by means of the heat transfer device (52).

## Revendications

1. Installation de stockage (1) pour le stockage thermochimique d'énergie, comportant un dispositif de réacteur (10) comprenant une chambre de réaction (102) entourée d'une enveloppe intérieure (104), à l'intérieur de laquelle chambre, une matière solide (110) peut être amenée, pendant une charge lors d'une réaction avant sous alimentation d'énergie thermique d'un premier état en libérant un fluide de réaction à un second état et peut être amenée, pendant une décharge lors d'une réaction inverse en libérant de l'énergie thermique du second état en absorbant le fluide de réaction au premier état, dans laquelle la chambre de réaction (102) comprend un dispositif de mélange,
**caractérisée en ce**
**qu'**au moyen du dispositif de mélange, la matière solide (110) peut être fluidisée pendant la réaction avant et/ou inverse, de sorte que pendant la charge, une pluralité de particules de matière solide entre en contact thermique de manière répétée avec des surfaces de transfert de chaleur de la chambre de réaction.

2. Installation de stockage (1) selon la revendication 1,
**caractérisée en ce**
**qu'**un dispositif d'entraînement (142) du dispositif de mélange, en particulier par un agencement correspondant d'un arbre (114), est agencé thermiquement découplé de la chambre de réaction (102) et en particulier,
**que** la chambre de réaction (102) est agencée autour d'un axe longitudinal médian (L) et le dispositif de mélange présente l'arbre (114) s'étendant sur l'axe longitudinal médian (L) et un agencement de rotation (112) tournant autour de l'arbre (114) comportant au moins un bras s'étendant radialement (116).

3. Installation de stockage (1) selon la revendication 2,
**caractérisée en ce**
**que** l'enveloppe intérieure (104) est conçue cylindrique et
**que** l'extrémité orientée radialement vers l'extérieur du/des bras (116) s'étend jusqu'à la paroi intérieure de l'enveloppe intérieure (104), dans laquelle en particulier un dispositif à ailettes (118) est agencé au niveau de l'extrémité du/des bras (116) ou l'extrémité est formée par le dispositif à ailettes (118).

4. Installation de stockage (1) selon l'une quelconque des revendications précédentes,
**caractérisée en ce**
**que** le dispositif de réacteur (10) présente un agencement d'apport de chaleur,
dans laquelle au moins une partie de l'enveloppe intérieure (104) et/ou une partie du dispositif de mélange peuvent être chauffées électriquement et/ou par induction et/ou
dans laquelle des structures ajoutées à la chambre de réaction (102) et/ou la matière solide (110) peuvent être chauffées par induction et/ou au moyen d'un rayonnement.

5. Installation de stockage (1) selon l'une quelconque des revendications précédentes,
**caractérisée en ce**
**que** le dispositif de réacteur (10) présente une enveloppe extérieure (106), qui entoure au moins une partie de l'enveloppe intérieure (104) en formant une chambre intermédiaire pouvant être traversée par le fluide (108).

6. Installation de stockage (1) selon l'une quelconque des revendications précédentes,
**caractérisée en ce**
**que** le dispositif de réacteur (10) présente un dispositif d'introduction (120) pour l'introduction de la matière solide (110) et un dispositif d'extraction (122) en particulier agencé en regard du dispositif d'introduction (120) et
**que** le dispositif de réacteur (10) présente un dispositif de raccordement (126) comportant une entrée de fluide pour l'alimentation du fluide de réaction hors de la chambre de réaction (102), dans laquelle en particulier l'entrée de fluide est agencée en dehors de la chambre de réaction (102), par ex. à l'intérieur du dispositif d'introduction (120).

7. Installation de stockage (1) selon la revendication 6,
**caractérisée en ce**
**que** le dispositif d'introduction (120) et/ou le dispositif d'extraction (122) sont conçus cylindriques et présentent un diamètre minimal de 50 mm, de préférence un diamètre minimal de 70 mm, en particulier un diamètre minimal de 76 mm.

8. Installation de stockage (1) selon l'une quelconque des revendications précédentes,
**caractérisée en ce**
**que** le dispositif de réacteur (10) présente un dispositif d'introduction de fluide (124) comportant une sortie de fluide, au moyen de laquelle le fluide de réaction, en particulier nécessaire pour la réaction inverse, peut être introduit dans la chambre de réaction (102), dans laquelle la sortie de fluide est conçue pour la pulvérisation du fluide de réaction et
**que** la sortie de fluide est agencée en dehors de la chambre de réaction (102), en particulier à l'intérieur du dispositif d'introduction (120), dans laquelle la distance est de préférence d'au moins 30 mm, de manière particulièrement préférée d'au moins 50 mm, par ex. de 80 mm.

9. Installation de stockage (1) selon l'une quelconque des revendications précédentes,
**caractérisée en ce**
**que** le dispositif de réacteur (10) comprend une unité de fermeture pneumatique comportant un dispositif de fermeture (136), en particulier agencé dans le dispositif d'extraction (122) et un dispositif de réglage (138), au moyen duquel la chambre de réaction (102) peut être fermée étanche aux fluides pendant la réaction avant et/ou inverse, dans laquelle le dispositif de réglage (138) est découplé thermiquement de la chambre de réaction (102).

10. Installation de stockage (1) selon l'une quelconque des revendications précédentes,
**caractérisée en ce**
**que** l'installation de stockage (1) comprend un circuit de fluide (50) comportant un dispositif de transfert de chaleur (52) et un dispositif de transport (54), au moyen duquel le fluide de réaction et/ou le fluide caloporteur peuvent être transportés hors du dispositif de réacteur (10), en particulier hors de la chambre de réaction (102) et/ou hors de la chambre intermédiaire (108), et guidés en émettant de la chaleur à travers le dispositif de transfert de chaleur (52) et
**que** le dispositif de transfert de chaleur (52) et le dispositif de transport (54) sont agencés en particulier dans une unité de transfert de chaleur/transport (56), dans laquelle le dispositif de transfert de chaleur (52) est conçu pour un transfert de chaleur à un second fluide caloporteur, en particulier circulant.

11. Installation de stockage (1) selon la revendication 10,
**caractérisée en ce**
**que** l'unité de transfert de chaleur/transport (56) est conçue comme un agencement de pompe annulaire, dans laquelle en fonctionnement, le second fluide caloporteur est formé par un fluide de refroidissement de l'agencement de pompe annulaire.

12. Installation de stockage (1) selon l'une quelconque des revendications précédentes,
**caractérisée en ce**
**que** l'installation de stockage (1) présente deux chambres de stockage séparées (22, 24), pour le stockage séparé de la matière solide (110) dans le premier état et dans le second état en dehors de la chambre de réaction (102).

13. Installation de stockage (1) selon l'une quelconque des revendications précédentes,
**caractérisée en ce**
**que** l'installation de stockage (1) est conçue pour un stockage longue durée pour l'alimentation en chaleur d'une unité à alimenter en chaleur, dans laquelle la charge peut avoir lieu pendant une période chaude et la décharge pendant une période froide.

14. Procédé pour le stockage thermochimique d'énergie avec une installation de stockage (1) selon l'une quelconque des revendications précédentes, dans lequel à l'intérieur d'une chambre de réaction (102) d'un dispositif de réacteur (10), une matière solide (110) peut être amenée, pendant une charge lors d'une réaction avant sous alimentation d'énergie thermique d'un premier état en libérant un fluide de réaction à un second état et peut être amenée, pendant une décharge lors d'une réaction inverse en libérant de l'énergie thermique du second état en absorbant le fluide de réaction au premier état, dans lequel dans la chambre de réaction (102), la matière solide (110) est transférée au moyen d'un dispositif de mélange pendant la réaction avant et/ou inverse,
**caractérisé en ce**
**qu'**au moyen du dispositif de mélange, la matière solide peut être fluidisée pendant la réaction avant et/ou inverse, dans lequel pendant la charge, une pluralité de particules de matière solide entre en contact thermique de manière répétée avec des surfaces de transfert de chaleur de la chambre de réaction.

15. Procédé selon la revendication 14,
**caractérisé en ce**
**que** la chambre de réaction (102) est remplie avant la charge et/ou la décharge avec une hauteur de remplissage maximale (H) de la matière solide (110) à l'intérieur de la chambre de réaction (102) de 4/5, de préférence 3/4 ou 2/3 d'une hauteur de la chambre de réaction (102) et en particulier
**que** l'énergie thermique fournie lors de la décharge est reçue au moyen d'un fluide caloporteur entourant la chambre de réaction (102) en contact thermique, en particulier au moyen d'un dispositif de transfert de chaleur (52) et mise à disposition pour être utilisée et/ou
**que** lors de la décharge, un excédent de fluide de réaction dans la chambre de réaction (102) est ajouté, lequel s'évapore en absorbant l'énergie thermique et est ensuite aspiré et, en particulier, est mis à disposition pour utilisation au moyen du dispositif de transfert de chaleur (52).
